# EUROPÄISCHE PATENTSCHRIFT

(11) **EP 1 693 940 B1**
(45) Veröffentlichungstag und Bekanntmachung des Hinweises auf die Patenterteilung: **01.04.2009**
(21) Anmeldenummer: 05010804.2
(22) Anmeldetag: 19.05.2005
(51) Int. Cl.: H02G 3/30, F16L 3/24, F16B 5/02

(54) **Bügelförmiger Kabelhalter, verbessert durch eine selbstsichernde Klemmschraube, die mit einer Gegendruckplatte zusammenwirkt**
Shackle shaped cable holder including a self-locking screw interacting with a pression plate
Support de câble en forme d'étrier comprenant une vis autoblocante interagissant avec une plaque de pression.

(30) Priorität: 18.02.2005 IT MI20050048 U
(43) Veröffentlichungstag der Anmeldung: 23.08.2006
(73) Patentinhaber: Fi.Mo.Tec. S.p.A., 20128 Milano (IT)
(72) Erfinder: Puddu, Marco, 20127 Milano (IT)
(74) Vertreter: Jaumann, Paolo

(56) Entgegenhaltungen:
- EP-A- 0 965 781
- GB-A- 892 561
- US-A- 2 976 901
- US-A- 3 765 465
- US-A- 5 017 068

## Beschreibung

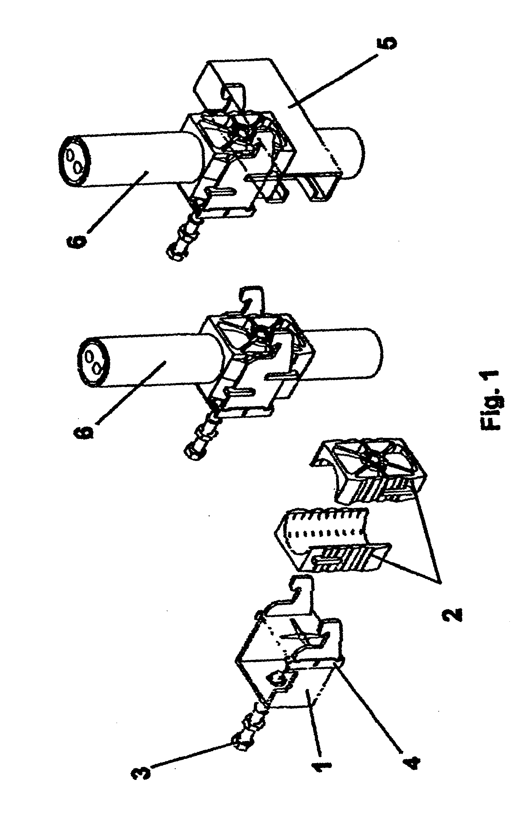

Gegenstand der vorliegenden Erfindung ist eine konstruktive Änderung der gut bekannten bügelförmigen Kabelhalter, die im allgemeinen aus einer U-förmigen Kabelschelle (1) mit zwei oder mehreren innenseitigen Sätteln (2) zur Aufnahme eines Kabels (6) oder eines Rohres bestehen. Diese Sättel, in Kunststoff oder Metall, werden von einer in den Bügel eingeführten Schraube (3) verstellt. Zwischen Schraubenspitze und den Kunststoffsätteln ist eine Gegendruckplatte (4) vorgesehen, welche die Sättel vor einem zu starken Zusammenschrauben schützt. Diese Gegendruckplatte kann frei, eingeklemmt oder fest mit einem der Sättel verbunden ausgestaltet sein. Die Abbildung 1 zeigt die Befestigung eines Kabels (6) in einem solchen bügelförmigen Kabelhalter, in diesem Fall in einen C-Profilträger (5) eingehakt.

In der Vergangenheit ist es vorgekommen, dass kleine, wie immer entstandene Vibrationen sich auf dieses System im Befestigungspunkt negativ auswirkten und eine Lockerung der Schraube hervorriefen. Um eine solche Lockerung zu verhindern, hat man eine zusätzliche Sicherung durch Anbringen auf der Schraube (3) einer Gegenmutter (7) und einer entsprechenden Federscheibe (8) vorgesehen.

Der feste dauerhafte Sitz der Schraube (3) war somit gewährleistet, allerdings mit dem Aufwand eines weiteren Arbeitsschrittes zum Anziehen der Gegenmutter und der Kosten für die Gegenmutter (7) und die Federscheibe (8).

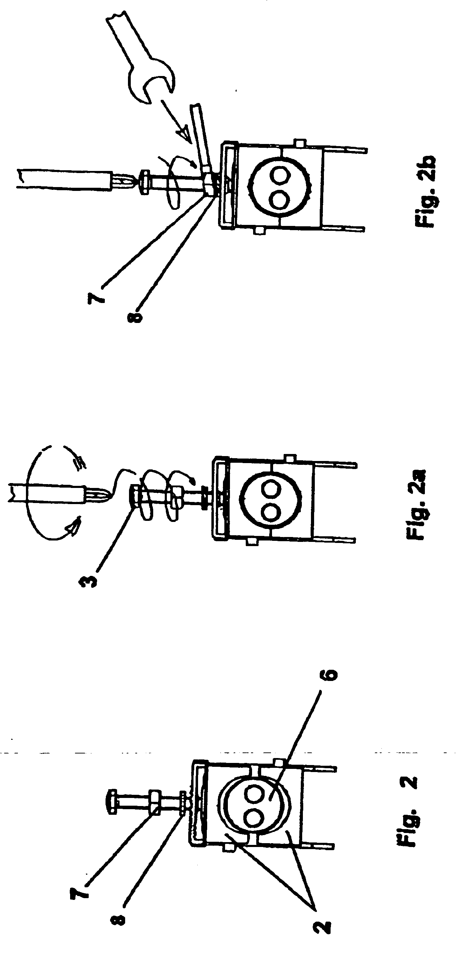

Die Abbildungen 2, 2a, 2b zeigen das bisher verwendete Befestigungsverfahren mit bügelförmigen Schellen unter höchsten Sicherheitsbedingungen.

Abbildung 2 zeigt wie das Kabel (6) zwischen den Sätteln (2) eingeklemmt wird.

Abbildung 2a zeigt das vollständige Einschrauben der Schraube (3) zur Blockierung des Kabels.

Abbildung 2b zeigt wie die Schraube durch Aufschrauben der Gegenmutter (7) und Einsetzen der Federscheibe (8) gegen eventuelles unerwünschtes Lockern gesichert wird.

Aufgabe der Erfindung ist es, vorteilhaft das Problem der sicheren Blockierung der Schraube mit gleichzeitiger Beschleunigung des Arbeitsvorgangs und Senkung der Kosten zu lösen.

Nach der vorliegenden Erfindung wird die Schraube (3) nach erfolgtem Einschrauben automatisch in ihrer Stellung gehalten. Ein Lockern wird somit ohne weiteres Zubehör oder Handlungen verhindert. Das Befestigen wird dadurch offensichtlich beschleunigt und auch Materialkosten gespart, da Gegenmutter und Federscheibe überflüssig geworden sind.

All dies wird durch Änderungen an der Spitze der Klemmschraube (3) ermöglicht, sowie an der Gegendruckplatte (4), die weiterhin zum Schutz der Kunststoffsättel gegen zu starkes Zusammenschrauben und zur besseren Verteilung der Druckkraft der Schraubenspitze (3) vorgesehen ist.

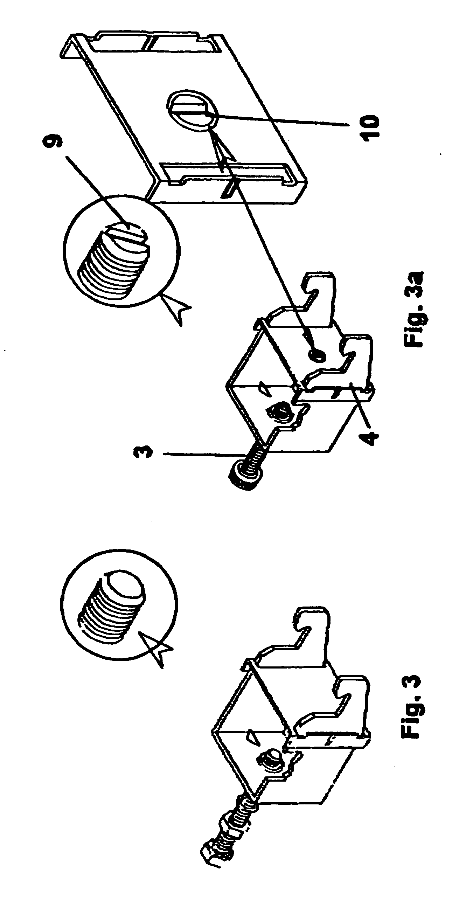

Die weiteren Abbildungen 3 und 3a zeigen deutlicher die am herkömmlichen Kabelhalter angebrachten Änderungen.

Die Abbildung 3 zeigt einen Kabelhalter in der bisherigen Ausführung mit einer Schraube mit flachem Ende und einer flachen Gegendruckplatte.

Die Abbildung 3a zeigt hingegen einen Kabelhalter in der neuen Ausführung. In der Abbildung sind die kritischen Punkte gekennzeichnet, und zwar das Ende der Klemmschraube mit einem "V"-förmigen Einschnitt (9), sowie die an der Gegendruckplatte in Pos. (10) angebrachte Änderung, wo in einer schraubenseitigen runden Aussparung eine V-förmige Rippe ausgestaltet ist.

Nach der vorliegenden, in der Abbildung 3a dargestellten Erfindung wurden die Schraube (3) und die Gegendruckplatte (4) so geändert, dass sie durch ihr Eingreifen dank der unten beschriebenen technischen Maßnahmen einander automatisch blockieren.

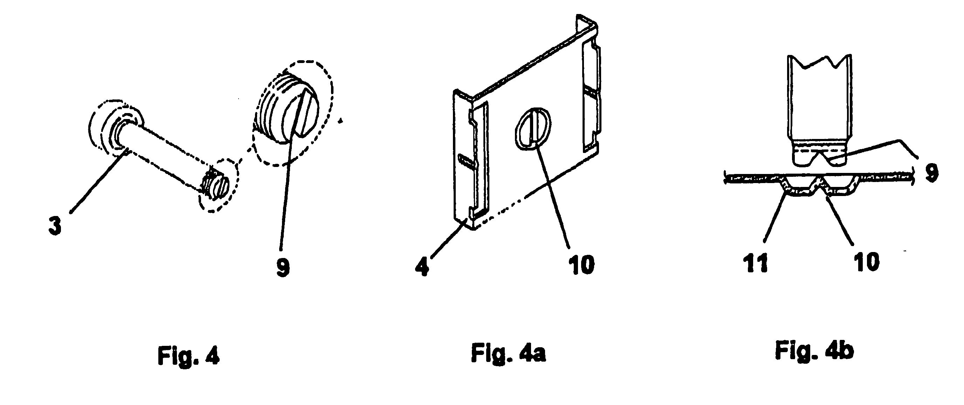

In den Abbildungen 4, 4a und 4b sind die am Ende der Schraube (3) und an der Gegendruckplatte (4) angebrachten Änderungen im Detail dargestellt.

Die Abbildung 4 zeigt das Ende der Schraube (3), mit der entsprechend ausgebildeten Vorderseite (9), welche den Druck auf die Gegendruckplatte (4) im Punkt (10) ausübt. Hier wurde ein diametraler "V"-förmiger Einschnitt (9) mit einem sich als günstig erwiesenen Winkel von ca. 60° angebracht. Die Abbildung 4a zeigt einen Aufriss der Gegendruckplatte (4), an der einen runde Aussparung mit einer Rippe zu sehen ist, auch diese Rippe "V"-förmig und ebenfalls mit einer Schrägung von ca 60°. Die Abbildung 4b zeigt im Schnitt die Gegendruckplatte mit dem Ende (9) der Schraube (3), die beim Einschrauben in die erstere eingreift.

Die Gegendruckplatte aus einem relativ dünnen Blech weist in der Mitte eine runde Aussparung (11) auf, die dazu bestimmt ist, das Schraubenende (9) aufzunehmen. In dieser Aussparung befindet sich eine "V"förmige Rippe oder ein "Kamm" (10), so bemessen, dass sie mit dem vorderseitigen Einschnitt (9) der Schraube übereinstimmt, um darin eingreifen zu können.

Die Abbildung 4b zeigt den Verband der beiden Teile und insbesondere wie das Schraubenende (9) von der runden Aussparung (10) aufgenommen wird und wie der Einschnitt (9) der Schraube und die Rippe (11) der Platte ineinander greifen. Das Schraubenende mit einem oder mehreren diametralen oder radialen Einschnitten (9) wirkt mit einem präzisen Gegenstück auf der Platte (4) zusammen. Wird die durch den Bügel (1) geführte Schraube (3) eingeschraubt, wirkt sie mit der Platte zusammen. Die Rippe der Platte (10) greift in den vorderseitigen Einschnitt (9) der Schraube ein und setzt sich mit jeder ganzen oder teilweisen Schraubendrehung fest. Dies bewirkt eine stabile Stellung der Schraube zur Gegendruckplatte und somit im Kabelhalter selbst.

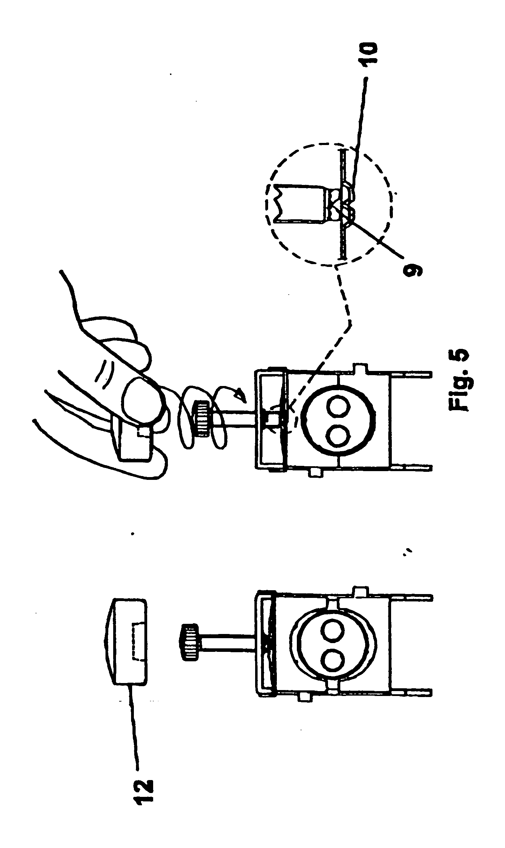

Die Abbildung 5 zeigt ein neues vereinfachtes Verfahren, bei welchem nach erfolgtem Festziehen der Schraube keine weiteren Maßnahmen zur Verhinderung eines eventuellen vibrationsbedingten Lösens der Schraube erforderlich sind.

In der vorliegenden, in der Abbildung 5 gezeigten Erfindung, dringt die durch den Bügel eingeschraubte Schraube ruckweise vor und erreicht zum Schluss eine stabile Stellung durch das Eingreifen des Kammes (10) in den Einschnitt (9).

Mit dieser Erfindung wurden erhebliche praktische und wirtschaftliche Vorteile erzielt. Das Anziehen der Schraube erzeugt eine interne Spannung zwischen der Schraube selbst und der Gegendruckplatte. Man fühlt einen klaren ruckweisen Vorschub der Klemmschraube und wenn zum Einschrauben und somit zum Vorschub der Schraube keine Kraft mehr aufgebracht wird, sitzt diese an der Rippe der Platte fest.

Ein Lockern der Schraube würde eine höhere Kraft erfordern als jene, die von kleinen Vibrationen in solchen Anlagen ausgelöst wird.

Durch das Wegfallen der Sicherungsmutter werden auch Spezialwerkzeuge wie Schraubenschlüssel und Schraubendreher überflüssig. Denn durch eine zweckmäßige Vergrößerung des Schraubenkopfes ist auch das von Hand aufgebrachte Anzugsmoment für einen dauerhaften Verband ausreichend, d.h. es sind keine Werkzeuge und Bearbeitungen in unbequemen Stellungen erforderlich.

Der Schraubenkopf (3) ist also nicht mehr hexagonal für Sechskantschlüssel, sondern einfach zylinderförmig, nach Möglichkeit gerändelt ausgebildet, um leicht von Hand angezogen werden zu können. Um das Einschrauben zu erleichtern kann eine Ringmutter oder eine Kapsel (12) geliefert werden, die auf den Kopf der Schraube aufgesetzt wird. Diese Kapsel, die den Durchmesser des Kopfes zweckmäßig vergrößert, ist eine weitere Erleichterung bei der Montage des Kabelhalters.

## Patentansprüche

1. Vorrichtung zur automatischen Lockerungsverhinderung von Klemmschrauben in Kabelhaltern einer Art, die einen U-förmigen Bügel (1) und mindestens zwei Sättel (2) umfasst, die zum Haltern und Festklemmen eines Kabels (6) an den genannten U-förmigen Bügel (1) angeschlossen sind,
wobei die genannte Vorrichtung einen oder mehrere radiale oder diametrale Einschnitte (9) umfasst, die am Ende einer Klemmschraube (3) des Kabelhalters vorgesehen sind, um mit entsprechenden Erhöhungen oder Rippen (10) zusammenzuwirken, die an einer Gegendruckplatte (4) vorgesehen sind, die die Sättel (2) des Kabelhalters schützt,
wobei die genannte Klemmschraube (3), wenn sie an den genannten U-förmigen Bügel (1) des Kabelhalters angeschraubt ist, mit dem zugehörigen Ende eine Druckkraft gegen die genannte Gegendruckplatte (4) ausübt, um das Kabel (6) zwischen den genannten Sätteln (2) festzuklemmen, wobei die genannte Klemmschraube (3) durch die genannten, mit den genannten Erhöhungen oder Rippen (10) zusammenwirkenden Einschnitte (9) am Auflockern gehindert sind.

2. Vorrichtung nach Anspruch 1, **dadurch gekennzeichnet, dass** die Einschnitte (9) am Vorderende der Schraube (3) ein "V"-förmiges Profil aufweisen.

3. Vorrichtung nach den Ansprüchen 1 oder 2, **dadurch gekennzeichnet, dass** die "V"-förmigen Einschnitte (9) am Vorderende der Schraube (3) eine asymmetrische Schrägung aufweisen, die in der Einschraubrichtung der Klemmschraube (3) flacher und in der Abschraubrichtung steiler ausgebildet ist.

4. Vorrichtung nach Anspruch 1, **dadurch gekennzeichnet, dass** die Gegendruckplatte (4) in der Mitte eine runde Aussparung (11) zur Aufnahme des Klemmschraubenendes (3) aufweist.

5. Vorrichtung nach einem beliebigen Anspruch von 1 bis 4, **dadurch gekennzeichnet, dass** eine Ringmutter oder Kapsel (12) mit einem zweckmäßig größer als den Kopf der Klemmschraube ausgeführten Durchmesser vorgesehen ist, um auf den Klemmschraubenkopf (3) aufgesetzt zu werden.

6. Vorrichtung nach Anspruch 5, **dadurch gekennzeichnet, dass** der Schraubenkopf (3) zylindrisch und gerändelt ist und die zum Aufsetzen auf den Schraubenkopf (3) geeignete Ringmutter oder Kapsel (12) eine entsprechende innenseitige Rändelung aufweist.

7. Kabelhalter, umfassend:
- einen U-färmigen Bügel (1),
- mindestens zwei an den genannten U-förmigen Bügel (1) angeschlossene Sättel (2), um ein Kabel (6) zu haltern und festzuklemmen,
- eine Gegendruckplatte (4) für den Schutz der genannten Sättel (2), und
- mindestens eine, für ein Anschrauben an den genannten U-förmigen Bügel geeignete Klemmschraube (3),
wobei die genannte Klemmschraube (3) an ihrem Ende einen oder mehrere radiale oder diametrale Einschnitte (9) aufweist, die für ein Zusammenwirken mit den entsprechenden, an der genannten Gegendruckplatte (4) angebrachten Erhöhungen oder Rippen (10) geeignet sind,
wobei die genannte Klemmschraube (3), wenn sie auf den genannten U-förmigen Bügel (1) aufgeschraubt ist, mit dem entsprechenden Ende eine Druckkraft gegen die genannte Gegendruckplatte (4) zum Festklemmens des Kabels (6) zwischen den genannte Sätteln (2) ausübt und gleichzeitig durch die genannten, mit den genannten Erhöhungen oder Rippen (10) zusammenwirkenden Einschnitte (9) am einem Auflockern gehindert wird.

8. Kabelhalter nach Anspruch 7, **dadurch gekennzeichnet, dass** die Einschnitte (9) am Vorderende der Schraube (3) ein "V"-förmiges Profil aufweisen.

9. Kabelhalter nach Anspruch 7 oder 8, **dadurch gekennzeichnet, dass** die "V"-förmigen Einschnitte (9) am Vorderende der Schraube (3) eine asymmetrische Schrägung aufweisen, die in der Einschraubrichtung der Klemmschraube flacher und in der Abschraubrichtung der Klemmschraube (3) steiler ausgebildet ist.

10. Kabelhalter nach Anspruch 7, **dadurch gekennzeichnet, dass** die Gegendruckplatte (4) in der Mitte eine runde Aussparung (11) aufweist, die eine Aufnahme für das Ende der Klemmschraube (3) formt.

## Claims

1. Device for the automatic loosening prevention of clamping screws in cable supports of the type comprising a U-shaped bracket (1) and at least two saddles (2) associated with said U-shaped bracket (1) for supporting and clamping a cable (6),
wherein said device comprises one or several radial or diametric incisions (9) which are provided, at the end of a clamping screw (3) of the cable support, for cooperating with corresponding increases or ribs (10), provided at a counter-pressure plate (4) protecting the saddles (2) of the cable support,
whereby said clamping screw (3), when it is threaded on said U-shaped bracket (1) of the cable support, exerts with the respective end a thrust force against said counter-pressure plate (4) for clamping the cable (6) between said saddles (2), with said clamping screw (3) being prevented from loosening by said incisions (9) cooperating with said increases or ribs (10).

2. Device according to claim 1, **characterised in that** the incisions (9) at the front end of the screw (3) exhibit a "V"-shaped profile.

3. Device according to claims 1 or 2, **characterised in that** the "V"-shaped incisions (9) at the front end of the screw (3) exhibit an asymmetric angular shape, which is flat in the screwing direction and steep formed in the unscrewing direction of the clamping screw (3).

4. Device according to claim 1, **characterised in that** the counter-pressure plate (4) exhibits at the center a round recess (11) forming a receptacle for the end of the clamping screw (3).

5. Device according to any claim from 1 to 4, **characterised in that** a ring nut or a capsule (12), with a suitably increased diameter than the head of the clamping screw, is provided for being fitted on the head of the clamping screw (3).

6. Device according to claim 5, **characterised in that** the head of the screw (3) is cylindrical and knurled and the ring nut or capsule (12), suitable to be fitted on the head of the screw (3), exhibits at the interior a corresponding knurling.

7. Cable support comprising :
- a U-shaped bracket (1),
- at least two saddles (2) associated with said U-shaped bracket (1) for supporting and clamping a cable (6),
- a counter-pressure plate (4) for protecting said saddles (2), and
- at least one clamping screw (3) suitable to be threaded on said U-shaped bracket (1),
wherein said clamping screw (3) exhibits at its end one or several radial or diametric incisions (9) that are suitable for cooperating with corresponding increases or ribs (10) provided at said counter-pressure plate (4), whereby said clamping screw (3), when it is threaded on said U-shaped bracket (1), exerts with the respective end a thrust force against said counter-pressure plate (4) for clamping the cable (6) between said saddles (2) and in the same time is prevented from loosening by said incisions (9) cooperating with said increases or ribs (10).

8. Cable support according to claim 7, **characterised in that** the incisions (9) at the front end of the clamping screw (3) exhibit a "V"-shaped profile.

9. Cable support according to claims 7 or 8, **characterised in that** the "V"-shaped incisions (9) at the front end of the screw (3) exhibit an asymmetric angular shape, which is flat in the clamping screwing direction and steep formed in the unscrewing direction of the clamping screw (3).

10. Cable according to claim 7, **characterised in that** the counter-pressure plate (4) exhibits at the center a round recess (11) forming a receptacle for the end of the clamping screw (3).

## Revendications

1. Dispositif pour l'anti-dévissage automatique des vis de serrage dans des serres-câble du type comprenant un organe en forme de U (1) et au moins deux étriers (2), qui sont raccordés audit organe en forme de U (1) pour retenir et serrer un câble (6),
ledit dispositif présentant une ou plusieurs entailles (9) radiales ou diamétrales qui sont prévues à l'extrémité d'une vis de serrage (3) du serre-câble, pour coopérer avec des zones en saillie ou des nervures (10) correspondantes prévues sur une plaque de contre-pression (4), qui protège les étriers (2) du serre-câble,
ladite vis de serrage (3), lorsqu'elle est vissée sur ledit organe en forme de U (1) du serre-câble exerçant au moyen de son extrémité respective, une force de pression contre ladite plaque de contre-pression (4), pour serrer le câble (6) entre lesdits étriers (2), le desserrage de ladite vis de serrage (3) étant empêché grâce auxdites entailles (9) qui coopèrent avec lesdites zones en saillie ou nervures (10).

2. Dispositif selon la revendication 1, **caractérisé en ce que** les entailles (9) à l'extrémité avant de la vis (3) présentent un profil en forme de V.

3. Dispositif selon la revendication 1 ou la revendication 2, **caractérisé en ce que** les entailles en forme de V (9) à l'extrémité avant de la vis (3) présentent une forme angulaire asymétrique, qui, dans la direction de serrage de la vis de serrage (3) est plus plate et dans la direction de desserrage est plus raide.

4. Dispositif selon la revendication 1 **caractérisé en ce que** la plaque de contre-pression (4) présente un évidement rond (11) au milieu pour recevoir l'extrémité de la vis de serrage (3).

5. Dispositif selon l'une quelconque des revendications 1 à 4, **caractérisé en ce que** un écrou annulaire ou capuchon (12) présentant un diamètre réalisé de forme appropriée plus grand que la tête de la vis de serrage est prévue, destiné à être inséré sur la tête de la vis de serrage (3).

6. Dispositif selon revendications 5, **caractérisé en ce que** la tête de vis (3) est cylindrique et est moletée et présente un moletage correspondant du côté intérieur pour la mise en place sur la tête de vis (3) de l'écrou annulaire ou capuchon (12) adapté.

7. Serre-câble comprenant :
- un organe en forme de U (1),
- au moins deux étriers (2) raccordés audit organe en forme de U (1) pour retenir et serrer un câble (6),
- une plaque de contre-pression (4) pour protéger lesdits étriers (2), et
- au moins une vis de serrage (3) adaptée pour être vissé sur ledit organe en forme de U (1),
ladite vis de serrage (3) présentant à son extrémité une ou plusieurs entailles (9) radiales ou diamétrales qui sont adaptées pour coopérer avec des zones en saillie ou des nervures (10) correspondantes adaptées à ladite plaque de contre-pression (4),
ladite vis de serrage (3), lorsqu'elle est vissée sur ledit organe en forme de U (1) exerçant au moyen de son extrémité correspondante, une force de pression contre ladite plaque de contre-pression (4), pour serrer le câble (6) entre lesdits étriers (2) et dont le desserrage est empêché simultanément grâce auxdites entailles (9) qui coopèrent avec lesdites zones en saillie ou nervures (10).

8. Serre-câble selon la revendication 7, **caractérisé en ce que** les entailles (9) à l'extrémité avant de la vis (3) présentent un profil en forme de V.

9. Serre-câble selon la revendication 7 ou la revendication 8, **caractérisé en ce que** les entailles en forme de V (9) à l'extrémité avant de la vis (3) présentent une forme angulaire asymétrique, qui, dans la direction de serrage de la vis de serrage (3) est plus plate et dans la direction de desserrage est plus raide.

10. Serre-câble selon la revendication 7, **caractérisé en ce que** la plaque de contre-pression (4) présente un évidement rond (11) au milieu pour recevoir l'extrémité de la vis de serrage (3).
